## Europäisches Patentamt

## European Patent Office

## Office européen des brevets

(19)

(11) Veröffentlichungsnummer: **0 091 644**
**B1**

(12) **EUROPÄISCHE PATENTSCHRIFT**

(45) Veröffentlichungstag der Patentschrift:
**11.03.87**

(51) Int. Cl.⁴: **H 04 L 13/00**

(21) Anmeldenummer: **83103315.4**

(22) Anmeldetag: **05.04.83**

(54) **Fernschreibmaschine.**

(30) Priorität: **08.04.82 DE 3213290**

(43) Veröffentlichungstag der Anmeldung:
**19.10.83 Patentblatt 83/42**

(45) Bekanntmachung des Hinweises auf die Patenterteilung:
**11.03.87 Patentblatt 87/11**

(84) Benannte Vertragsstaaten:
**CH FR GB IT LI SE**

(56) Entgegenhaltungen:
**DE - A - 1 815 433**
**DE - A - 2 251 831**
**DE - A - 2 746 807**
**US - A - 3 923 139**

(73) Patentinhaber: **Siemens Aktiengesellschaft Berlin und München, Wittelsbacherplatz 2, D-8000 München 2 (DE)**

(72) Erfinder: **Lutz, Roman, Ing. grad., Guardinistrasse63, D-8000 München 70 (DE)**

ACTORUM AG

**Beschreibung**

Die Erfindung bezieht sich auf eine Fernschreibmaschine gemäss dem Oberbegriff des Patentanspruchs 1.

Es sind bereits allgemein Fernschreibmaschinen bekannt, mit denen sowohl eine Erstellung von aus Zeichen gebildeten Texten im Lokalbetrieb als auch eine Fernübertragung dieser Texte möglich ist. Die Fernschreibmaschinen bestehen üblicherweise aus mindestens einer Eingabeeinheit, einer zentralen Steuereinheit, einer Leitungsanpassungseinheit, die die Verbindung der Fernschreibmaschine zu einer Fernleitung herstellt und mindestens einer Ausgabeeinheit sowie einer Stromversorgung. Als Eingabeeinheit sind üblicherweise eine Tastatur oder ein Lochstreifenleser vorgesehen, während als Ausgabeeinheiten üblicherweise ein Drucker und ein Lochstreifenstanzer vorgesehen sind. Bei neueren Fernschreibmaschinen ist als Ausgabeeinheit zusätzlich eine Anzeigeeinheit vorgesehen, die beispielsweise als Kathodenstrahlröhre ausgebildet ist. Ausserdem ist ein Floppydisk-Speicher vorgesehen, der sowohl als Eingabeeinheit als auch Ausgabeeinheit verwendet werden kann und die Lochstreifengeräte ersetzen kann.

Für die Übertragung werden die Fernschreibzeichen entsprechend dem internationalen Telegrafenalphabet Nr. 2 codiert und mit Start- und Stop-Schritten versehen. Die Synchronisation zwischen der sendenden und der empfangenden Fernschreibmaschine erfolgt in der Weise, dass jedes gesendete Zeichen den Drucker in der empfangenden Fernschreibmaschine erneut startet. Das Druckwerk bleibt in der Spalte des zuletzt gedruckten Zeichens oder in der nächsten Spalte stehen und wartet auf den Empfang des nächsten Zeichens. Dies trifft insbesondere dann zu, wenn mittels der Tastatur Zeichen mit einer kleinen Eingabegeschwindigkeit eingegeben werden.

Durch den Start-Stop-Betrieb werden erhebliche Anforderungen an die zeichenweise arbeitenden Aggregate, insbesondere an den Drucker gestellt. In der Zeit zwischen zwei empfangenen Zeichen muss das Druckwerk an die Abdruckstelle beschleunigt und wieder verzögert werden. Bei einem Typendruck, beispielsweise mittels eines Typenrads muss das Druckwerk bereits vor dem Abdruck wieder zum Stillstand gebracht werden. Häufig ist es auch erforderlich nach dem Abdruck des letzten Zeichens das Druckwerk derart zu positionieren, dass das letzte Zeichen nach seinem Abdruck von der Bedienperson gelesen werden kann. Schliesslich ist es auch erforderlich, in der Zeitdauer zwischen zwei empfangenen Zeichen einen Wagenrücklauf und einen Zeichenvorschub durchzuführen, d.h. das Druckwerk vom Ende der Zeile in die Anfangsstellung der nächsten Zeile zu bringen.

Für diese bei Fernschreibmaschinen übliche Betriebsweise ist für die Bewegung des Druckwerks jeweils kurzzeitig sehr viel Energie erforderlich und das Netzteil der Fernschreibmaschine muss hohe Leistungsreserven für diese Betriebsweise aufweisen. Ausserdem sind grosse Motoren erforderlich, um die Bewegungen des Druckwerks mit hinreichender Geschwindigkeit durchführen zu können. Schliesslich werden an die mechanischen Genauigkeiten sehr grosse Anforderungen gestellt. All dies hat zur Folge, dass die für den Start-Stop-Betrieb ausgelegten Fernschreibmaschinen einen verhältnismässig grossen Aufwand erfordern und die Herstellungskosten entsprechend hoch sind.

Aus der DE-OS 2 215 831 ist ein elektrisches Schreibwerk bekannt, bei dem eine Anzeigeeinheit vorgesehen ist, an der die Zeichen einer Zeile darstellbar sind. Erst nach der vollständigen Darstellung der Zeichen wenigstens einer Zeile werden ein Schreibkopf und ein Fortbewegungsmechanismus des Aufzeichnungsträgers angesteuert. Hierzu ist jedoch das Betätigen einer Taste erforderlich.

Bei diesem bekannten Schreibwerk handelt es sich nicht um eine Fernschreibmaschine und das bekannte Schreibwerk ist auch nicht geeignet, im Start-Stop-Betrieb eingegebene oder empfangene Zeichen vor dem Auftreten eines dem Zeilenende zugeordneten Signals auszudrucken.

Der Erfindung liegt daher die Aufgabe zugrunde, eine Fernschreibmaschine anzugeben, die einen geringen Aufwand erfordern und mit der dennoch alle von einer Fernschreibmaschine geforderten Funktionen durchführbar sind.

Erfindungsgemäss wird die Aufgabe bei der Fernschreibmaschine der eingangs genannten Art durch die im kennzeichnenden Teil des Patentanspruchs 1 angegebenen Merkmale gelöst.

Die Fernschreibmaschine gemäss der Erfindung hat den Vorteil, dass sie einen besonders geringen Aufwand erfordert und sie damit kostengünstig herstellbar ist. Die Fernschreibmaschine ist mit geringen mechanischen Anforderungen herstellbar und weist infolge des ausschliesslich zeilenweisen Drucks einen geringen Verschleiss auf. Falls als Druckwerk ein Mosaikdruckwerk vorgesehen ist, ist nur ein kleiner Motor für die Bewegung des Druckwerks in Zeilenrichtung erforderlich, da das Druckwerk nur zu Beginn der Zeile beschleunigt und am Ende der Zeile abgebremst werden muss. Bei der Verwendung eines Thermodruckers kann zudem auch auf diesen Motor verzichtet werden, wenn, wie bekannten Thermodruckern die Druckelemente über die ganze Zeile angeordnet sind. Da das Druckwerk nicht für ein zeichenweises Ausdrucken der Zeichen vorgesehen ist, kann eine sehr hohe Druckgeschwindigkeit erreicht werden, so dass eine derartige Fernschreibmaschine nicht nur für eine Übertragung von 50 Bit/s sondern auch für eine Übertragung von 200 Bit/s geeignet ist, ohne dass ein wesentlich grösserer Aufwand erforderlich ist.

Die Anzeigeeinheit kann einzeilig oder mehrzeilig ausgebildet sein. Falls sie einzeilig ausgebildet ist, werden jeweils diejenigen Zeichen einer Zeile angezeigt, die noch nicht ausgedruckt wurden. Falls die Anzeigeeinheit zweizeilig ausgebildet ist, kann zusätzlich die jeweils vorhergehende, bereits gedruckte Zeile angezeigt werden. In diesem Fall ist es nicht erforderlich, nach jedem Drucken einer Zeile am Druckwerk eine Sichtbarkeitsstellung einzustellen. Ausserdem wird ein Redigieren eines gespeicherten Textes vereinfacht, da die Orientierung im Text erleichtert wird. Dies trifft auch zu, wenn weitere Zeilen an der Anzeigeeinheit darstellbar sind. Falls die Anzeigeeinheit wenige Zeilen aufweist, erweist es sich als zweckmässig, sie als Flüssigkristallanzeige oder als Vakuumfluoreszenzanzeige auszubilden. Bei einer Vielzahl von Zeilen ist es günstig, die Anzeigeeinheit unter Verwendung einer Kathodenstrahlröhre herzustellen. Falls die Anzeigeeinheit als Flüssigkristallanzeige ausgebildet ist und nur wenige Zeilen aufweist, kann diese mit der Tastatur der Fernschreibmaschine eine Baueinheit bilden, die getrennt von dem Drucker aufstellbar ist und mit diesem lediglich über ein Kabel verbunden ist. Es ist auch denkbar, die Flüssigkristallanzeige an der Frontseite des Druckers oder in der Nähe der Abdruckstelle anzuordnen.

Das Steuersignal, nach dessen Empfang die Zeichen einer Zeile ausgedruckt werden, kann beispielsweise ein Signal sein, das den Zeichen «Wagenrücklauf», «Zeilenvorschub» oder «Neue Zeile» zugeordnet ist. Es ist auch zweckmässig, das Steuersignal dann zu erzeugen, wenn während einer vorgegebenen Zeitdauer, die beispielsweise dem Empfang von vier Zeichen zugeordnet ist, keine weiteren Zeichen empfangen werden. In diesem Fall werden alle bis dahin vorhandenen Zeichen der Zeile ausgedruckt und das Druckwerk fährt anschliessend wieder in die Ausgangsposition zurück. Wenn weitere Zeichen eintreffen, werden diese innerhalb der Zeile fortsetzend gedruckt, wobei das Druckwerk ebenfalls nur zu Beginn der Zeile beschleunigt und sich kontinuierlich bis zu der entsprechenden Abdruckstelle bewegt. Diese Betriebsweise erweist sich insbesondere dann als zweckmässig, wenn mittels der Tastatur ein Dialogbetrieb durchgeführt wird.

Ein Ausführungsbeispiel der erfindungsgemässen Fernschreibmaschine wird im folgenden anhand von Zeichnungen näher erläutert. Es zeigen:

Fig. 1 ein Blockschaltbild der Fernschreibmaschine,

Fig. 2 ein Blockschaltbild der Zentralsteuerung der Fernschreibmaschine.

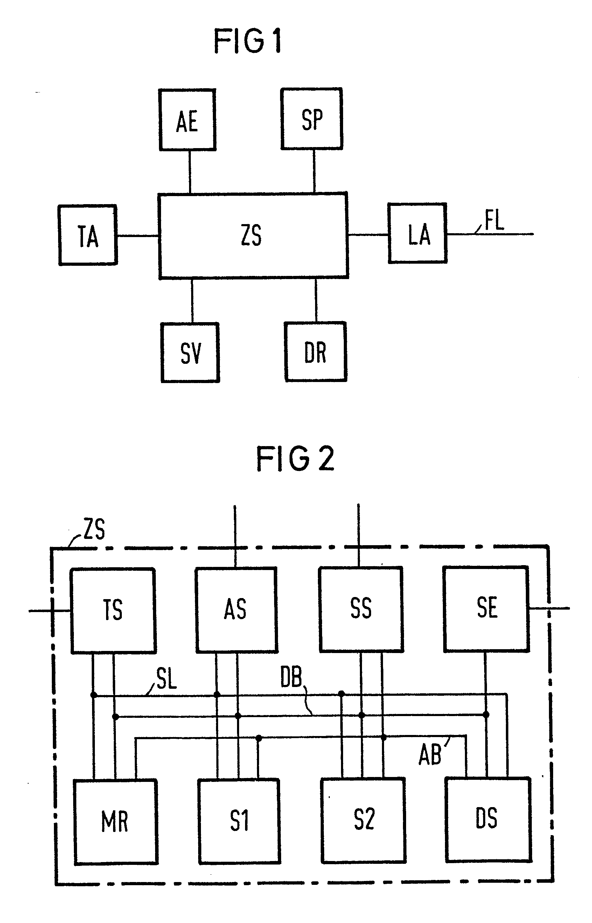

Die in Fig. 1 dargestellte Fernschreibmaschine enthält eine mikrorechnergesteuerte Zentralsteuerung ZS. Sie hat die Aufgabe, Datenübertragungswege zwischen Ein- und Ausgabeeinheiten festzulegen und die Daten zu übertragen. Ausserdem werden von ihr Gerätesteuer- und Überwachungsfunktionen durchgeführt. Der interne Datenaustausch erfolgt dabei über Datenbusse. Als Eingabeeinheiten sind eine Tastatur TA und ein Speicher SP vorgesehen, der als Lochstreifenleser und Lochstreifenstanzer, als Floppydiskgerät oder als Magnetblasenspeicher ausgebildet sein kann. Als Ausgabeeinheiten sind eine Anzeigeeinheit AE, ein Drucker DR und ebenfalls der Speicher SP vorgesehen. Die Anzeigeeinheit AE kann als ein- oder mehrzeilige Flüssigkristallanzeige oder als Bildschirm ausgebildet sein. Der Drucker DR ist als zeilenweise arbeitender Drucker ausgebildet, der entweder ein Mosaikdruckwerk enthält und die Zeichen während einer kontinuierlichen Bewegung der Druckwerks ausdruckt oder ein Thermodruckwerk enthält, bei dem die Druckelemente über die ganze Druckzeile verteilt sind. Der Abdruck der Zeichen erfolgt in jedem Fall zeilenweise. Nach dem Eintreffen eines Steuersignals werden jeweils alle bis zu diesem Zeitpunkt noch nicht ausgedruckten Zeichen einer Zeile abgedruckt. Dieses Steuersignal ist beispielsweise ein dem Steuerzeichen «Wagenrücklauf», «Zeilenvorschub» oder «Neue Zeile» zugeordnetes Signal. Es ist auch denkbar, insbesondere für einen Dialogbetrieb die Zeichen einer Zeile jeweils dann auszudrucken, wenn nach einem letzten Zeichen für eine vorgegebene Zeitdauer keine weiteren Zeichen eintreffen. In diesem Fall wird dann vor dem Druck der nachfolgenden Zeichen das Druckwerk jeweils wieder in seine Ausgangsstellung zurückgebracht. Dies ist im Fall des Mosaikdruckwerks der linke Zeilenrand und im Fall des Thermodruckers der Rücktransport des Aufzeichnungsträgers um eine Zeile. Anschliessend werden dann die jeweils folgenden Zeichen der Zeile abgedruckt.

Die Zeichen einer Zeile werden zunächst in einem Nachrichtenspeicher gespeichert und erst nach dem Empfang des Steuersignals zum Drucker übertragen. Der Nachrichtenspeicher ist entweder der Speicher SP oder ein weiterer Speicher, beispielsweise ein Halbleiterspeicher in der Zentralsteuerung ZS. In dem Nachrichtenspeicher kann auch eine vollständige Nachricht gespeichert werden, so dass unter Verwendung der Anzeigeeinheit AE ein Redigieren des Textes möglich ist, bevor dieser am Drucker DR ausgegeben wird oder über eine Leitungsanpassung LA und eine Fernleitung FL zu einer empfangenden Station übertragen wird.

Falls die Anzeigeeinheit AE weniger Zeichen aufnehmen kann als eine Zeile, werden die neu eingegebenen Zeichen jeweils am rechten Rand der Anzeigeeinheit AE dargestellt, während am linken Rand die jeweils ältesten Zeichen herausgeschoben werden. Zur Erleichterung der Redigier- und Korrigiermöglichkeiten ist es zweckmässig, wenn die Anzeigeeinheit AE eine Mehrzahl von Zeilen aufweist. In diesem Fall können mindestens eine vorangehende und mindestens eine nachfolgende Zeile dargestellt werden und in der aktuellen Zeile können die einzelnen Zeichen mittels einer Schreibmarke gekennzeichnet werden.

Falls die Anzeigeeinheit AE verhältnismässig wenig Zeilen enthält und als Flüssigkristall- oder als Vakuumfluoreszenzanzeige ausgebildet ist kann die Anzeigeeinheit AE derart an der Tastatur TA angeordnet sein, dass sie mit dieser eine Baueinheit bildet und vom Drucker DR getrennt aufstellbar ist. Zur Vermeidung von Spiegelungen kann die Anzeigeeinheit AE auch schwenkbar angeordnet sein, sie kann aber auch an der Frontseite des Druckers DR angeordnet sein. Dies erweist sich insbesondere dann als zweckmässig, wenn die Fernschreibmaschine als reines Ausgabegerät vorgesehen ist. Ausser den Zeichen kann die Anzeigeeinheit AE auch Bediener und/oder Steuerinformationen, wie beispielsweise die jeweils noch freien Speicherplätze oder die Uhrzeit anzeigen.

An der Zentralsteuerung ZS ist ausser den genannten Einheiten noch eine Stromversorgung SV in an sich bekannter Weise angeschlossen.

Die in Fig. 2 dargestellte Zentralsteuerung ZS enthält ein Mikrorechnersystem, das aus einem Mikrorechner MR, einem Festwertspeicher S1, einem Schreib-Lese-Speicher S2 und einem Bussystem gebildet wird. Das Bussystem enthält einen Datenbus, einen Adressenbus und mehrere Steuerleitungen. An den Bussen ist eine Tastatursteuerung ST angeschlossen, die ihrerseits mit der Tastatur TA verbunden ist. Weiterhin sind an den Bussen eine Anzeigesteuerung AS, an der die Anzeigeeinheit AE angeschlossen ist, eine Speichersteuerung SS, an der der Speicher SP angeschlossen ist, eine Sende-Empfangssteuerung SE, an der die Leitungsanpassung LA angeschlossen ist und eine Druckersteuerung DS angeschlossen, die mit dem Drucker DR verbunden ist.

Bei einer Eingabe von Zeichen mittels der Tastatur TA gelangen diese über die Tastatursteuerung TS unter Steuerung des Mikrorechnersystems in den Speicher S2, der üblicherweise als Halbleiterspeicher ausgebildet ist und gleichzeitig als Nachrichtenspeicher und als Redigierspeicher dient. Der Speicher S1 dient hingegen als Programmspeicher und in ihm oder im Speicher S2 können den verschiedenen Varianten zugeordnete Daten und/oder die Kennung gespeichert sein, die nach einem Verbindungsaufbau zwischen den Teilnehmern ausgetauscht wird. Die eingegebenen Zeichen werden im Lokalbetrieb über die Anzeigesteuerung AS der Anzeigeeinheit AE zugeführt. Bei der Verwendung einer Flüssigkristallanzeige enthält die Anzeigesteuerung AS einen Parallel-Serien-Umsetzer, der die auf dem Datenbus in paralleler Form vorliegenden codierten Zeichen in seriell codierte Zeichen umsetzt, um die Anzahl der Leitungen zu der Anzeigeeinheit AE möglichst klein zu halten. Die Daten können gleichzeitig im Speicher SP gespeichert werden und werden zu diesem Zweck der Speichersteuerung SS zugeführt, die mit dem Mikrorechnersystem entsprechend einem direkten Speicherzugriff (DMA) zusammenarbeitet.

Wenn die Zeichen zu einem fernen Teilnehmer übertragen werden sollen, gelangen diese über die Sende-Empfangs-Steuerung SE und die Leitungsanpassung LA zur Fernleitung FL. Zuvor muss selbstverständlich die Verbindung in bekannter Weise aufgebaut werden, einschliesslich des Austausches der Kennungen. Das Ausdrukken der Zeichen erfolgt erst dann, wenn das Steuersignal auftritt. Wenn am Ende der Zeile das Steuerzeichen «Wagenrücklauf» gegeben wurde, werden die Zeichen von Speicher S2 über die Druckersteuerung DS dem Drucker DR zugeführt, der sie im Fall des Mosaikdruckwerks, beispielsweise eines Nadeldruckwerks kontinuierlich und im Fall des Thermodruckwerks gleichzeitig ausdruckt.

Wenn von einer fernen Station Zeichen empfangen werden, gelangen diese über die Leitungsanpassung LA und die Sende-Empfangssteuerung SE ebenfalls in den Speicher S2. Vom Speicher S2 werden sie über die Anzeigesteuerung AS der Anzeigeeinheit AE und gegebenenfalls gleichzeitig über die Speichersteuerung SS dem Speicher SP zugeführt. Wenn in der Zentralsteuerung das Steuersignal erzeugt wird, weil beispielsweise das Zeichen «Wagenrücklauf» empfangen wurde, werden alle bis zu diesem Zeitpunkt empfangenen Zeichen einer Zeile über die Druckersteuerung DS dem Drucker DR zugeführt und dort ausgedruckt. Gleichzeitig werden die ausgedruckten Zeichen an der Anzeigeeinheit AE gelöscht. Entsprechendes gilt, wenn im Dialogbetrieb, beispielsweise im Tastaturbetrieb Zeichen eingegeben wurden und während einer vorgegebenen Zeitdauer, die beispielsweise der Übertragungsdauer von vier Zeichen zugeordnet ist, keine weiteren Zeichen empfangen werden. In diesem Fall wird unter Verwendung des Mikrorechners MR als Steuersignal ein Zeitsignal erzeugt und alle bis zu diesem Zeitpunkt noch nicht ausgedruckten Zeichen der Zeile werden am Drucker DR ausgedruckt. Anschliessend nimmt der Drucker DR wieder seine Ausgangsstellung an. Bei einem Nadeldruckwerk ist dies der linke Rand. Wenn weitere Zeichen eintreffen, werden diese wieder an der Anzeigeeinheit AE dargestellt und nach dem Auftreten eines weiteren Steuersignals werden die bis zu diesem Zeitpunkt noch nicht ausgedruckten Zeichen abgedruckt. Im Fall des Nadeldruckwerks wird an den Stellen, an denen bereits Zeichen gedruckt wurden, durch die Darstellung Leerzeichen ein Abdruck verhindert und das Abdrucken der Zeichen beginnt erst mit den bisher noch nicht dargestellten Zeichen. Im Fall des Thermodruckwerks wird der Aufzeichnungsträger wieder um die Zeile zurückbewegt und es werden diejenigen Druckelemente angesteuert, die den bisher noch nicht abgedruckten Zeichen zugeordnet sind. Das Steuersignal kann auch in diesem Fall wieder ein zeitabhängiges Signal oder das Signal für «Wagenrücklauf» bedeuten.

Im Nachrichtenspeicher können alle bereits ausgedruckten Zeichen der Zeile mit einem Markierbit versehen werden und beim Auftreten des Steuersignals werden nur diejenigen Zeichen der Zeilen ausgedruckt, die dieses Markierbit nicht enthalten.

**Patentansprüche**

1. Fernschreibmaschine zum Eingeben, Senden und/oder Empfangen und Ausgeben von Zeichen, bei der die Zeichen Schriftzeichen darstellen, bei der die Zeichen durch mit Start- und Stoppolarität versehene Fernschreibzeichen codiert sind und entsprechend einem Start-Stop-Betrieb übertragen werden, bei der ein Speicher vorgesehen ist, der die Zeichen mindestens einer Zeile speichert, bei der eine Anzeigeeinheit vorgesehen ist, an der die Zeichen vor ihrem Ausdrucken anzeigbar sind und bei der ein Drucker vorgesehen ist, der die Zeichen ausdruckt, dadurch gekennzeichnet, dass der Drucker (DR) als zeilenweise arbeitender Drucker ausgebildet ist, der erst nach dem Auftreten eines einem Zeilenende zugeordneten Steuersignals die Zeichen der vollständigen Zeile ausdruckt, dass der Drucker (DR) bei einer unvollständigen Zeile die bis zu diesem Zeitpunkt jeweils noch nicht ausgedruckten Zeichen nach dem Auftreten eines einem Zeitsignal zugeordneten Steuersignals ausdruckt, dass das Zeitsignal jeweils dann erzeugt wird, wenn während einer vorgegebenen Zeitdauer keine Zeichen eingegeben oder empfangen werden und dass das Druckwerk (DR) des Druckers auch vor jedem Ausdrukken der restlichen Zeichen der unvollständigen Zeile jeweils in seine Ausgangslage zurückkehrt.

2. Fernschreibmaschine nach Anspruch 1, dadurch gekennzeichnet, dass als Drucker (DR) ein ausschliesslich kontinuierlich arbeitender Mosaikdrucker vorgesehen ist.

3. Fernschreibmaschine nach Anspruch 1, dadurch gekennzeichnet, dass als Drucker (DR) ein ausschliesslich zeilenweise arbeitender Thermodrucker vorgesehen ist.

4. Fernschreibmaschine nach einem der Ansprüche 1 bis 3, dadurch gekennzeichnet, dass die Anzeigeeinheit (AE) einzeilig ausgebildet ist.

5. Fernschreibmaschine nach einem der Ansprüche 1 bis 3, dadurch gekennzeichnet, dass die Anzeigeeinheit (AE) mehrzeilig ausgebildet ist und ausser der aktuellen Zeile mindestens eine vorangehende Zeile anzeigt.

6. Fernschreibmaschine nach einem der Ansprüche 1 bis 3, dadurch gekennzeichnet, dass die Anzeigeeinheit (AE) mehrzeilig ausgebildet ist und ausser der aktuellen Zeile mindestens eine vorangehende und mindestens eine nachfolgende Zeile anzeigt.

7. Fernschreibmaschine nach einem der Ansprüche 1 bis 6, dadurch gekennzeichnet, dass die Anzeigeeinheit (AE) als Flüssigkristallanzeige ausgebildet ist.

8. Fernschreibmaschine nach einem der Ansprüche 1 bis 6, dadurch gekennzeichnet, dass die Anzeigeeinheit (AE) als Kathodenstrahlröhre ausgebildet ist.

9. Fernschreibmaschine nach einem der Ansprüche 1 bis 8, dadurch gekennzeichnet, dass die Anzeigeeinheit (AE) mit der Tastatur (TA) der Fernschreibmaschine eine Baueinheit bildet.

**Claims**

1. A teleprinter for the input, transmission and/ or reception and output of characters, where the characters represent graphic characters, where the characters are coded by teleprinter signals provided with start and stop polarity and are transmitted in accordance with start-stop operation, where a store is provided which stores the characters of at least one line, where a display unit is provided on which the characters can be displayed prior to their print-out and where a printer is provided which prints out the characters, characterised in that the printer (DR) comprises a printer which operates row-by-row and which does not print out the characters of the entire line until following the occurrence of a control signal assigned to a line end, that when a line is incomplete the printer (DR) prints out the characters which have not yet been printed before this time, following the occurrence of a control signal assigned to a time signal, that the time signal is produced when no characters are input or received during a predetermined period of time and that the printer mechanism (DR) of the printer in each case returns to its starting position before each printout of the remainting characters of the incomplete line.

2. A teleprinter as claimed in claim 1, characterised in that the printer (DR) comprises a mosaic printer which operates exclusively continuously.

3. A teleprinter as claimed in claim 1, characterised in that the printer (DR) comprises a thermal-printer which operates exclusively line-byline.

4. A teleprinter as claimed in one of the claims 1 to 3, characterised in that the display unit (AE) is a one-line display unit.

5. A teleprinter as claimed in one of the claims 1 to 3, characterised in that the display unit (AE) is a multi-line display preceding line.

6. A teleprinter as claimed in one of the claims 1 to 3, characterised in that the display unit (AE) is a multi-line display unit and in addition to the current line, displays at least one preceding line and at least one following line.

7. A teleprinter as claimed in one of the claims 1 to 6, characterised in that the display unit (AE) is a liquid crystal display.

8. A teleprinter as claimed in one of the claims 1 to 6, characterised in that the display unit (AE) comprises a cathode ray tube.

9. A teleprinter as claimed in one of the claims 1 to 8, characterised in that the display unit (AE) forms a unit together with the keyboard (TA) of the teleprinter.

**Revendications**

1. Téléscripteur pour introduire, émettre et/ou recevoir et délivrer des caractères, dans lequel les caractères représentent des caractères d'écriture, les caractères étant codés par des caractères télégraphiques munis de polarités start et stop et étant transmis selon un mode start-stop, et dans lequel sont prévues une mémoire qui mémorise les caractères d'au moins une ligne, une unité d'affichage sur laquelle les caractères peuvent être visualisés avant leur impression et une imprimante qui imprime les caractères, caractérisé en ce que l'imprimante (DR) est une imprimante opérant ligne par ligne, qui imprime les caractères de la ligne complète seulement après apparition d'un signal de commande coordonné à une fin de ligne, que l'imprimante (DR), dans le cas d'une ligne incomplète, imprime, après l'apparition d'un signal de commande coordonné à un signal de temps, les caractères non encore imprimés à cet instant, que le signal de temps est produit chaque fois qu'aucun signe n'est introduit ou reçu pendant une durée préfixée, et que le mécanisme d'impression de l'imprimante (DR) retourne également à sa position de départ avant chaque impression des caractères restants d'une ligne incomplète.

2. Téléscripteur selon la revendication 1, caractérisé en ce que l'imprimante (DR) est une imprimante à mosaïque qui travaille uniquement de façon continue.

3. Téléscripteur selon la revendication 1, caractérisé en ce que l'imprimante (DR) est une imprimante thermique opérant uniquement ligne par ligne.

4. Téléscripteur selon une des revendications 1 à 3, caractérisé en ce que l'unité d'affichage (AE) est à une ligne.

5. Téléscripteur selon une des revendications 1 à 3, caractérisé en ce que l'unité d'affichage (AE) est à plusieurs lignes et indique, outre la ligne en cours, au moins une ligne précédente.

6. Téléscripteur selon une des revendications 1 à 3, caractérisé en ce que l'unité d'affichage (AE) est à plusieurs lignes et indique, outre la ligne en cours, au moins une ligne précédente et au moins une ligne suivante.

7. Téléscripteur selon une des revendications 1 à 6, caractérisé en ce que l'unité d'affichage (AE) est du type à cristaux liquides.

8. Téléscripteur selon une des revendications 1 à 6, caractérisé en ce que l'unité d'affichage (AE) est du type à tube cathodique.

9. Téléscripteur selon une des revendications 1 à 8, caractérisé en ce que l'unité d'affichage (AE) forme un ensemble avec le clavier (TA) du téléscripteur.

# FIG 1

# FIG 2